# EUROPEAN PATENT APPLICATION

(11) **EP 1 047 214 A2**
(43) Date of publication of application: **25.10.2000**
(21) Application number: 00303227.3
(22) Date of filing: 17.04.2000
(51) Int. Cl.: H04J 3/16

(54) **Multiplex structures for communications system**

(30) Priority: 22.04.1999 GB 9909220
(71) Applicant: Marconi Communications Limited, Coventry, CV3 1HJ (GB)
(72) Inventor: Abbas, Ghani Abdul Muttalib Dr., Wollaton, Nottingham NG8 2PX (GB)
(74) Representative: Hoste, Colin Francis

(57) **Abstract**

A multiplex structure for synchronous communication systems, including synchronous digital hierarchy (SDH) and SONET are proposed providing larger information structures for more efficient transport of high bandwidth data traffic. The information structures include, for SDH systems virtual containers 5 and 6 (VC5 and VC6) and, for SONET systems, synchronous transfer signal (STS) synchronous payload envelopes (SPE) 12 and 48 (STS-12 SPE and STS-48 SPE). VC5 and STS-12 SPE can support a raw data rate of 622 Mbit/s while VC6 and STS-48 SPE can support 2.5 Gbit/s.

## Description

The present invention relates to the field of communications and in particular to multiplex structures for synchronous communication systems.

Current synchronous digital hierarchy (SDH) standards such as ITU specification ITU-T G.707 "Network Node Interface for the Synchronous Digital Hierarchy" define a multiplex structure for various sizes of container and virtual container for transferring data at rates in the range from 1.5 to 140Mbit/s. These standards also define corresponding information structures including administrative units (AU) such as AU-3 and AU-4, tributary units (TU) such as TU-3, tributary unit groups (TUG) such as TUG-3 and Synchronous Transport Modules (STM-N) where N is 1, 4, 16 or 64. Similar entities are defined by corresponding SONET standards such as ANSI T1.105 "Digital Hierarchy-Optical Interface Rates and Formats Specification". These standards were originally developed for voice-based networks where small granularity (i.e. the ability to divide the information to be transported into small chunks for control purposes) is needed. Current networks used for voice traffic and operating with small granularity are generally optimised for operation at and management of low bit rate (e.g. 1.5 or 2Mbit/s) data streams multiplexed together into higher bit rate data streams at 45 or 140Mbit/s. In the last few years the volume of data traffic has grown and now exceeds the volume of voice traffic in a number of public networks. Data networks are capable of operating at much higher bit rates (e.g. 2.5Gbit/s). One example of the growth in data traffic is the growth in internet protocol (IP) traffic. IP routers with interfaces capable of handling 2.5Gbit/s and 622Mbit/s using concatenated virtual containers VC-4-16c and VC-4-4c respectively have been deployed in networks. However, this use of concatenation leads to an undesirable increase in complexity. Furthermore, there is interest on the part of internet service providers in the possibility of using more of the capacity of SDH and SONET containers for information payload, i.e. by reducing the capacity used for overhead. Photonic system operators would also benefit from a simplified SDH/SONET frame structure for mapping signals.

The present invention provides a multiplex structure for a synchronous communications system comprising a container comprising more than 2340 bytes.

In a preferred embodiment the payload comprises 9387 bytes.

In a preferred embodiment the payload comprises 38790 bytes.

In a preferred embodiment the multiplex structure for a synchronous communications system comprises a virtual container comprising a path overhead and a payload comprising the above container.

The present invention also provides a method for the transmission of data in a synchronous digital communications system comprising the step of multiplexing more than 2340 bytes to form a payload.

Embodiments of the present invention will now be described by way of illustration with reference to the drawings in which:-
Figure 1 shows details of various information structures according to the present invention;
Figure 2 shows a synchronous communications hierarchy structure according to a first embodiment of the invention;
Figure 3 shows a synchronous communications hierarchy structure according to a second embodiment of the invention;

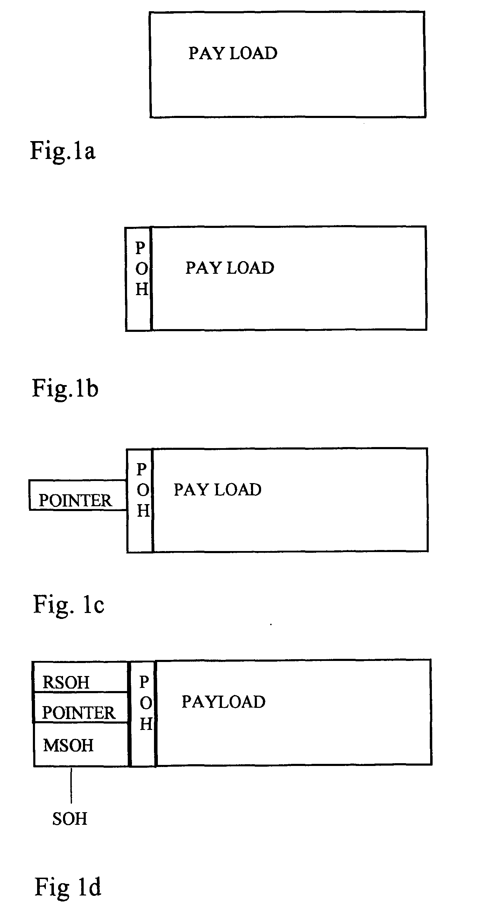

Figure 1 shows a number of information structures according to the present invention. In Figure 1a is shown a container comprising a number of bytes (for the avoidance of any doubt, the bytes referred to here have a capacity of 8 bits each) that, taken together, make up a seamless payload that is available for the transport of information. In operation, data from a message entering a communications system according to the present invention will be mapped into the payload of one or more such containers. In a container 5 (C5) according to the present invention, the seamless payload comprises 9387 bytes. In a container 6 (C6) according to a further embodiment of the present invention, the seamless payload comprises 38790 bytes.

The term "seamless" is used here to indicate a single entity, i.e. a container, capable of transporting the entire bandwidth as a single, undivided whole. This includes a container carrying a similar, aggregate bandwidth which is divided among a number of smaller bandwidths shared between a number of smaller containers, these smaller containers being multiplexed together but not combined, to make up the aggregate bandwidth. According to this definition, contiguously concatenated containers or contiguously concatenated virtual containers (as defined, e.g. in ITU-T G.707) are explicitly excluded by use of the term seamless. Hence the term "seamless" does not apply here to a number of smaller containers associated with each other and processed together in an identical manner so that they may be effectively considered as a single unit.

Figure 1b shows a virtual container according to the present invention. The virtual container comprises the container of Figure 1a with the addition of a single column of path overhead bytes. In line with convention, all the information structures of Figure 1 should be interpreted as being made up of columns of 9 bytes. Hence the path overhead comprises a total of 9 bytes in a single column. The payload may comprise either the container C5 or C6 of Figure 1a. If the payload of the virtual container comprises a single C5, the virtual container is a virtual container 5 (VC5) or, possibly a partially empty virtual container 6 (VC6). If the payload comprises a single container 6 (or four container 5s) then the virtual container is a virtual container 6 (VC6). The function and makeup of the path overhead is the same as the VC4 path overhead as described in ITU-T G.707.

A tributary unit group (TUG) according to the present invention (not shown) comprises the virtual container of Figure 1b in which the virtual container is aligned to the system clock, thus producing a tributary unit (TU) within the TUG to allow synchronisation of the incoming signal to the system clock. In order to locate the position of the start of the first byte of the VC, pointer information is included in the path overhead of the VC. Bytes H1, H2 and H3 are provided in the path overhead for this purpose.

Figure 1c shows an administrative unit according to the present invention comprising the virtual container of Figure 1b together with a further pointer. The function of the further pointer is to indicate the phase alignment of the virtual container with respect to the synchronous transfer module frame (described below). The form of the pointer may be similar to that defined in ITU-T G.707 with respect to administrative unit 4 (AU4). To allow the start of the virtual container to be unambiguously identified within the STM, the pointer value may be used to count in steps of multiple bytes.

Figure 1d shows a STM according to the present invention comprising the administrative unit of Figure 1c together with additional overhead bytes. Regenerator section overhead (RSOH) and multiplex section overhead (MSOH) form, in combination with the AU pointer, the section overhead (SOH) of the STM. The form and function of the RSOH and MSOH is as defined for STM-1 in ITU-T G.707. The STM of the invention as illustrated in Figure 1d is referred to here as a broadband STMx (BSTMx) where x may take a value of 1, 4, 16, 64, etc. Advantageously, only a single, 81 byte SOH as defined in ITU-T G.707 for STM1 is sufficient for BSTM-1 according to the present invention. BSTMx (for values of x of 4, 16, etc.) are produced by byte interleaving BSTM-1 tributary signals.

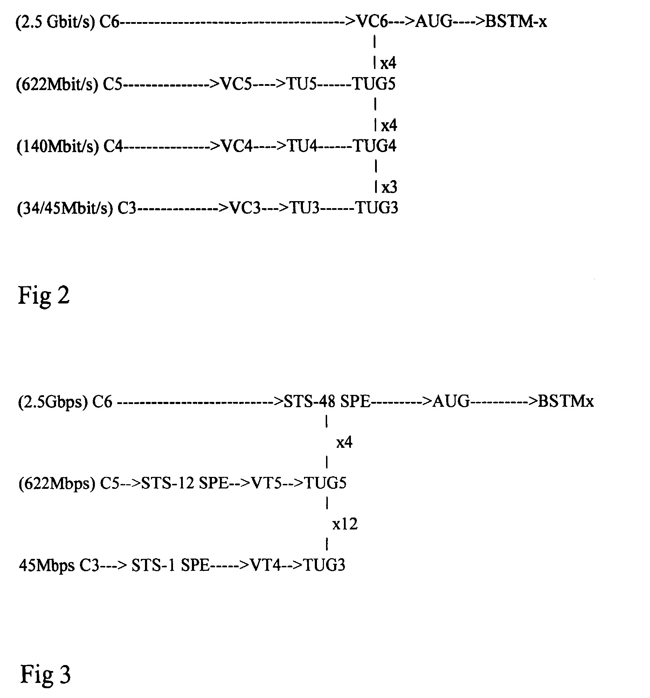

Figure 2 shows a synchronous communications hierarchy structure illustrating the relationship between various information structures according to a first embodiment of the invention. At the left of the Figure are shown SDH containers C3, C4, C5, and C6, together with an indication of their maximum data carrying capacities (i.e. 34/45, 140, 622 Mbit/s and 2.5 Gbit/s, respectively).

The lower two levels comprise the upper levels of the known SDH hierarchy. Other levels from the known SDH hierarchy are not shown here. Hence Figure 2 shows SDH container 3 (C3) at the lowest level and on the next level up, SDH container 4 (C4). On the third level is shown container 5 (C5) according to the present invention and on the fourth and top level is shown container 6 (C6) according to the present invention.

C3 is joined in the Figure by a horizontal arrow to SDH virtual container 3 (VC3) and C4 is joined by a horizontal arrow to SDH virtual container 4 (VC4): both arrows indicating the combination of the container together with a path overhead, as described above. VC3 is joined by a further horizontal arrow to SDH tributary unit group 3 (TUG3) via SDH tributary unit 3 (TU3) and VC4 is joined by a further horizontal arrow to SDH tributary unit group 4 (TUG4) via SDH tributary unit 4 (TU4) these arrows indicating an aligning function as described above. A vertical line joins TUG3 and TUG4 indicating a multiplexing operation in which three TUG3s may be multiplexed into a single TUG4. As indicated above, the lower two lines of Figure 2 comprise known information structures C3, VC3, TU3, TUG3, C4 and VC4 as defined in ITU-T G.707.

Referring once again to Figure 2, C5 is joined by a horizontal arrow to virtual container 5 (VC5) according to the present invention, the arrow indicating the combination of the container together with a path overhead, to form the VC5 which in turn is joined by a horizontal arrow to new tributary unit group 5 (TUG5) via a tributary unit 5 (TU5) according to the present invention. The latter horizontal arrow indicating aligning of the VC5, these operations corresponding to the equivalent operations described above. A vertical line joining TUG4 with TUG5 is used to indicate multiplexing of four TUG4s into a TUG5, although a TUG5 could, alternatively, comprise a plurality of multiplexed lower TUGs, such as twelve TUG3. Also in Figure 2, C6 is shown linked by a horizontal arrow to new virtual container 6 (VC6) according to the present invention, the horizontal arrow indicating the combination of the container together with a path overhead, to form new VC6. A vertical line joining TUG5 with VC6 indicates multiplexing of four TUG5 into a VC6, although a VC6 could, alternatively, comprise a plurality of multiplexed lower TUGs, such as 48 TUG3 or sixteen TUG4. VC6 is shown joined by a horizontal arrow to new administrative unit group (AUG) according to the present invention which in turn is joined by a horizontal arrow to broadband synchronous transfer module x (BSTM-x) according to the present invention: these horizontal arrows indicating aligning the VC6 with the BSTMx frame and multiplexing of one or a plurality of AUGs into a BSTM-x. Again, these operations correspond to the equivalent operations described above.

Figure 3 shows a synchronous communications hierarchy structure illustrating the relationship between various information structures according to a second embodiment of the invention. At the left of the Figure are shown SONET containers C3, C5, and C6, together with an indication of their maximum data carrying capacities (i.e. 45, 622 Mbit/s and 2.5 Gbit/s, respectively).

The lower level comprises the upper level of the known SONET hierarchy. Other levels from the known SONET hierarchy are not shown here. Hence Figure 3 shows SONET container 3 (C3) at the lowest level, on the next level up is shown new container 5 (C5) according to the present invention; and on the third and top level is shown new container 6 (C6) according to the present invention.

C3 is joined in the Figure by a horizontal arrow to SONET synchronous transport signal 1 (STS 1) synchronous payload envelope SPE, the arrow indicating the combination of the container with a path overhead to form the STS1-SPE. STS1-SPE is joined by a further horizontal arrow to TUG3 via SONET virtual tributary 4 (VT4): the arrow indicating an aligning function as described above.

Referring once again to Figure 3, C5 is joined by a horizontal arrow to new synchronous transport signal 12 (STS12) synchronous payload envelope (SPE) according to the present invention, the arrow indicating the combination of the container with a path overhead to form the STS12-SPE which in turn is joined by a horizontal arrow to new TUG5 via new virtual tributary 5 (VT5) according to the present invention. The horizontal arrow indicating an aligning function, as described above. A vertical line joining TUG3 with TUG5 is used to indicate multiplexing of multiple TUG3 into a TUG5, these operations corresponding to the equivalent operations described above, although a TUG5 could, alternatively, comprise a plurality of multiplexed lower TUG. Also in Figure 3, C6 is shown linked by a horizontal arrow to synchronous transport signal 48 (STS48) synchronous payload envelope (SPE) according to the present invention, the arrow indicating the combination of the container with a path overhead to form the STS1-SPE. A vertical line joining TUG5 with STS48-SPE indicates multiplexing of four TUG into a STS48-SPE, although a VC6 could, alternatively, comprise a plurality of multiplexed lower TUG, such as 48 TUG 3. STS48-SPE is shown joined by a horizontal arrow to new administrative unit group (AUG) according to the present invention which in turn is joined by a horizontal arrow to broadband synchronous transfer module x (BSTMx) according to the present invention; these horizontal arrows indicating aligning the STS48-SPE with the BSTMx frame and multiplexing of one or a plurality of AUGs into a BSTM-x. Again, these operations correspond to the equivalent operations described above.

The present invention is not limited to the specific embodiments described above but it equally applicable to information structures of higher and intermediate bandwidth including a bandwidth of 10 Gbit/s (i.e. equivalent to STM-64).

## Claims

1. A multiplex structure for a synchronous communications system comprising a container comprising more than 2340 bytes.

2. The multiplex structure of Claim 1 in which the payload comprises 9387 bytes.

3. A multiplex structure for a synchronous communications system comprising a virtual container comprising a path overhead and a payload comprising the container of any one of Claims 1 and 2.

4. A multiplex structure for a synchronous communications system comprising a tributary unit group (TUG) comprising a tributary group (TU) comprising the virtual container of Claim 3 in which the TU comprises a pointer for indicating the position of the first byte of the VC within the TU.

5. The multiplex structure of Claim 1 in which the payload comprises 38790 bytes.

6. A multiplex structure for a synchronous communications system comprising a virtual container comprising a path overhead and a payload comprising the container of any one of Claims 1, 2 or 5.

7. The multiplex structure of Claim 3 for transporting a payload comprising four virtual containers 4 (VC4).

8. The multiplex structure of Claim 6 for transporting a payload comprising sixteen VC4.

9. The multiplex structure of any one of Claims 4 and 6 for aligning and multiplexing virtual containers 4 (VC4) or virtual containers 3 (VC3).

10. The multiplex structure of Claim 6 for aligning and multiplexing the TUG of Claim 4.

11. A synchronous digital communications system comprising a means for aligning and multiplexing VC4s or VC3s into the multiplex structure of Claim 4 or Claim 6.

12. The synchronous digital communications system of Claim 11 also comprising means for aligning and multiplexing the virtual container of Claim 3 into the multiplex structure of Claim 5.

13. A multiplex structure for a synchronous communications system comprising a synchronous transfer module (BSTM) comprising the virtual container of any one of Claims 3 or 6 or the TUG of Claim 4, in which the BSTM comprises a single section overhead (SOH).

14. The multiplex structure of Claim 13 in which the SOH comprises 81 bytes.

15. A multiplex structure for a synchronous communications system comprising a synchronous transport signal (STS) synchronous payload envelope SPE comprising a path overhead and a payload comprising the container of any one of Claims 1 and 2.

16. A multiplex structure for a synchronous communications system comprising a tributary unit group (TUG) comprising a virtual tributary (VT) comprising the STS-SPE of Claim 15 in which the VT comprises a pointer for indicating the position of the first byte of the STS-SPE within the VT.

17. A multiplex structure for a synchronous communications system comprising a synchronous transport signal (STS) synchronous payload envelope (SPE) comprising a path overhead and a payload comprising the container of any one of Claims 1, 2 or 5.

18. The multiplex structure of Claim 16 for transporting a payload comprising twelve synchronous transport signal (STS) 1 synchronous payload envelope (SPE) (STS1-SPE).

19. The multiplex structure of any one of Claims 16 and 17 for aligning and multiplexing STS1-SPE.

20. The multiplex structure of Claim 17 for aligning and multiplexing the TUG of Claim 16.

21. A synchronous digital communications system comprising a means for aligning and multiplexing STS1-SPE into the multiplex structure of Claim 16 or Claim 17.

22. The synchronous digital communications system of Claim 21 also comprising means for aligning and multiplexing the STS-SPE of Claim 15 into the multiplex structure of Claim 17.

23. A multiplex structure for a synchronous communications system comprising a synchronous transfer module (BSTM) comprising the STS-SPE of any one of Claims 15 or 17 or the TUG of Claim 16, in which the BSTM comprises a single section overhead (SOH).

24. The multiplex structure of Claim 23 in which the SOH comprises 81 bytes.

25. The multiplex structure of any above claim in which the payload is seamless

26. A method for the transmission of data in a synchronous communications system comprising the step of multiplexing more than 2340 bytes to form a payload.

27. The method of Claim 26 comprising the step of multiplexing 9387 bytes to form a payload.

28. The method of Claim 26 comprising the step of multiplexing 38790 bytes to form a payload.

29. A method for the transmission of data in a synchronous communications system comprising the step of combining the payload of any one of Claims 26 and 27 with a path overhead to form a VC or a STS-SPE.

30. The method of Claim 29 comprising the step of combining the VC or STS-SPE of Claim 29 with a pointer to form a TUG.

31. A method for the transmission of data in a synchronous communications system comprising the step of combining the payload of Claim 28 with a path overhead to form a VC or a STS-SPE.

32. The method of any one of Claims 26 to 31 comprising the step of forming a synchronous transfer module (BSTM) comprising the VC or STS-SPE of any one of Claims 29 and 31 or the TUG of Claim 30, in which the BSTM comprises a single section overhead (SOH).

33. The method of any one of Claims 26 to 32 in which the payload is seamless.

34. A communications system for exploiting the multiplex structure of any one of Claims 1 to 25.
